(19) Europäisches Patentamt
European Patent Office
Office européen des brevets

(11) **EP 2 065 816 A1**

(12) **EUROPEAN PATENT APPLICATION**

(43) Date of publication:
**03.06.2009 Bulletin 2009/23**

(51) Int Cl.:
***G06F 17/30*** (2006.01)

(21) Application number: **07254602.1**

(22) Date of filing: **28.11.2007**

(84) Designated Contracting States:
**AT BE BG CH CY CZ DE DK EE ES FI FR GB GR HU IE IS IT LI LT LU LV MC MT NL PL PT RO SE SI SK TR**
Designated Extension States:
**AL BA HR MK RS**

(71) Applicant: **British Telecommunications public limited company**
**81 Newgate Street**
**EC1A 7AJ (GB)**

(72) Inventor: **The designation of the inventor has not yet been filed**

(74) Representative: **Lloyd, Barry George William et al**
**BT Group Legal**
**Intellectual Property Department**
**PP C5A**
**BT Centre**
**81 Newgate Street**
**London EC1A 7AJ (GB)**

(54) **Computer file storage**

(57) A computer system has storage for data files and can store and retrieval of files in accordance with a folder structure. The system is able to associate a file with more than one folder. Upon receipt of a request to store a file, it determines a measure of degree of association between the file and each of a plurality of folders of the structure; on the basis of these measures it selects folders to associate the file with, and stores the measure in respect of each of the selected folders.

Fig. 3

Printed by Jouve, 75001 PARIS (FR)

**Description**

The present application is concerned with computer systems and more particularly with the organisation of storage and retrieval in computer systems.

All such systems have a need for the storage and retrieval of files. A file is a set of data that is stored and retrieved as a discrete logical unit. By "discrete logical unit" we mean that a single command may be issued to perform a function, such as store, retrieve, delete, rename, in respect of that file. This terminology does not preclude the possibility that - as is the case in many practical systems - a single file may actually, at a lower level, be physically stored as a plurality of separate parts. For example the data that constitute one file may occupy a number of sectors of a disc store (which may not even be contiguous). In some contexts files are referred to as "documents". Here we will use "file", for the sake of consistency. A file is invariably given a name (the filename), by which commands may refer to it.

File storage systems are usually based on the concept of associating a file with a folder. Sometimes the term "directory" is used interchangeably with "folder". A file that is associated with a particular folder is often said to be stored in that folder, to be "in" or even "located in" the folder, even though the association is a logical one and does not necessarily bear any relation to the actual physical location of the data. Each folder has a name. Folders can be hierarchical - i.e. a folder can be "in" another folder, just as a file can. The association between a file (or folder) and the folder with which it is associated may be distinguished from other attributes of a file (or folder) by noting that the folder name forms part of the full name by which it may be referred to in a command. Thus, in systems using this folder concept the file may be referred to by a concatenation of a folder name or names and the filename that represents a path through the hierarchy of folders: for example, if one sets up a folder for each year, and within each such folder, create a folder for each month, and within each month there is a file for each day for which data are to be recorded, then a pathname might have the format "1998/July/17.dat" where "1998" and "July" are folder names and "17.dat" is the filename. Alternatively the file can be accessed by navigating the folder structure.

One of the benefits of a folder structure is that it becomes easier for a user who wishes to retrieve data to do so if he can remember which folder the needed file is likely to be located in. In some systems, such as Microsoft's MSDOS and Windows operating systems, a file is permitted to be associated with only one folder at any given time. In others, such as Unix and Linux, a file may be associated with one or with more than one folder. This offers the user the opportunity, should the file be relevant to more than one concept or subject for which a folder has been created, to associate the file with two or more such folders.

Often a user, when creating a file, or loading it from an external source, will decide for himself which folder to put it in. In US patent application 2005/0256842, the user is assisted in this selection by being offered a ranked list from which to choose a destination to save the file.

US2005/0010593 has a "predictive function" that automatically chooses a folder to store a file in.

Aspects of the present invention are defined in the claims.

Some embodiments of the invention will now be described, by way of example, with reference to the accompanying drawings, in which:

Figure 1 is a block diagram of a computer system embodying the invention;
Figure 2 is a diagram showing the structure of the disc storage 6 of Figure 1;
Figure 3 is a logic diagram showing the operation of the system of Figure 1;
Figures 4 and 5 are examples of graphical representations of associations between files and folders; and
Figures 6, 7 and 8 are examples of graphical representations of associations between folders.

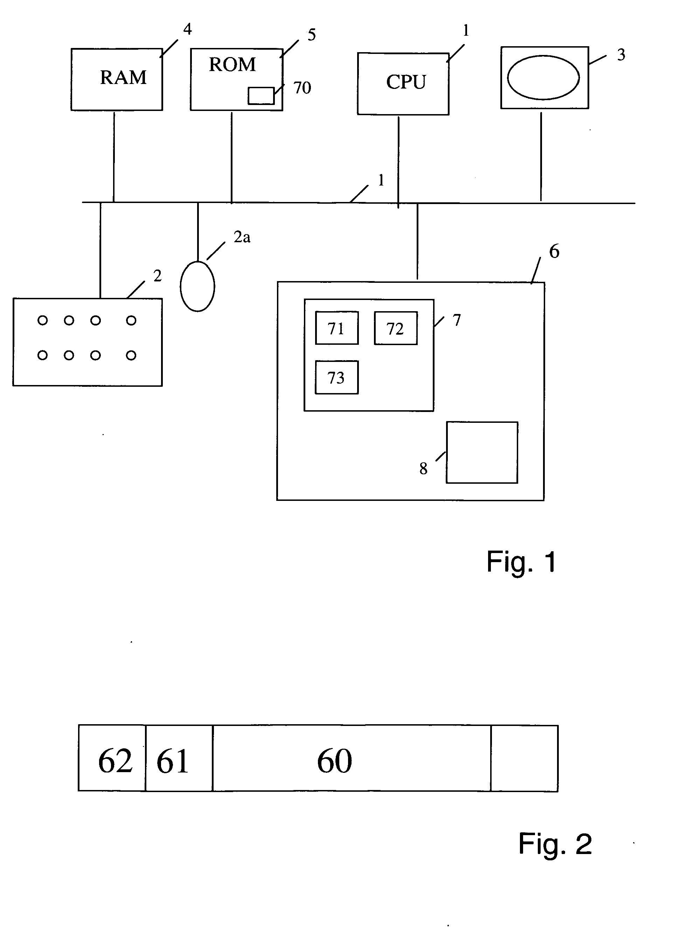

The computer system shown in Figure 1 has a processor 1, a keyboard 2, mouse (or other pointing device) 2a, a display 3, general-purpose random- access memory 4, non-volatile memory 5 (which may consist of a read-only memory and/or read-write memory with its own battery) and disc storage 6. In the disc storage 6 are stored operating system software 7 and application programs 8, which can be loaded into the memory 4 for execution. In practice, lower-level elements 70 of the operating system are stored in the non-volatile memory 5; the decision as to which elements will be stored here is at the discretion of the system designer, but at minimum it will contain software that responds to a command to read a discrete amount of data (which we will refer to as a cluster, as in MSDOS) from the disc 6, and software operable (using such commands) upon start up to read other elements of the operating system into the memory 4 for execution when the system is first switched on (boot-up). This low-level software is conventional.

Before describing further details of the operating system, we first explain the data structures on the disc 6, as shown in Figure 2 The disc has a files area 60 for storage of files. Each file occupies one or more clusters on the disc and can be accessed by specifying the cluster number of first cluster of the file. A chaining table 61 (sometimes called a file allocation table) stores for each cluster the cluster number of the next cluster belonging to that file or - for the last cluster, a code so indicating. Unused clusters are flagged as unused so that the system knows which clusters are available. As explained earlier, files are more conveniently identified by a filename rather than a cluster number, and are organised logically in accordance with a folder structure. This is regarded as consisting of a root folder, considered to contain all files and all other folders, and sub-folders. The disc contains a root directory 62. Note that whereas sometimes the word "directory" is used synonymously with "folder", in this description we use the word only to refer to an actual list of the contents of a folder. The root directory contains an entry for each file in the root folder. This entry comprises the filename of the file, starting cluster number, an attribute field and an association field. It may also contain various metadata such as the time, date, or file size, but these are incidental for present purposes. Each subfolder has its own directory, often referred to as a sub-directory, having the same structure as the root directory; each subdirectory is stored as a file like any other. Also, the sub-directory has - like any other file - its own directory entry in a higher-order directory; the attribute field of this entry is set to a particular value to indicate that it points to a sub-directory rather than an ordinary file. Note that the architecture described in this paragraph is conventional except for the provision of the association field, which will be discussed in detail in due course.

The operating system software includes a section 71 that performs the following file-handling functions, responding to the command listed in the left-hand column of Table I by performing the actions specified in the right-hand column:

**Table I**

| Command | Action |
|---|---|
| Save file from memory as specified *filename* in specified *folder* | Store the file on disc using the next available cluster or clusters; Record the "next cluster" numbers (if any) and end code in the chaining table; Create an entry in the directory for the specified folder, the entry containing the specified filename and the starting cluster number. |
| Create a sub-folder having a specified folder name, in a specified folder. | Store an empty file as above, with the specified folder name as the filename; set the attribute in the new directory entry to "directory" |
| Retrieve file with specified filename in specified folder | Read the entry for the specified filename from the directory for the specified folder; Using the starting cluster number, read the next cluster numbers (if any) from the chaining table; Read the cluster(s) into memory |
| Delete specified filename in specified folder | Read the entry for the specified filename from the directory for the specified folder; Mark in the chaining table, as unused, the starting cluster and any further clusters pointed to; Delete the directory entry |
| Delete sub-folder having a specified folder name, in a specified folder | Delete the corresponding subdirectory, in the same manner as for file deletion; many systems prohibit deletion of a subdirectory unless it is empty or alternatively delete all files and lower-order subdirectories within it. |
| Display directory for folder having specified directory name | Read the contents of this directory and display it via the display 3 |

These commands provide for a file to reside in only one directory; however, the user may store a file that is assigned to two directories, or link a file already stored in one directory, to another directory, by the following commands:

**Table II**

| Command | Action |
|---|---|
| Save file from memory as specified *filename* in specified *folder1* and *folder2* | Store the file on disc using the next available cluster or clusters; Record the "next cluster" numbers (if any) and end code in the chaining table; Create an entry in the directory for *folder1*, the entry containing the specified filename and the starting cluster number: Create an identical entry in the directory for *folder2* |

(continued)

| Command | Action |
|---|---|
| Link to *folder2* a file having specified *filename*, in specified *folder1* | Find, in the directory for *folder1*, the entry for *filename*, and copy it into the directory for folder 2. |
| Unlink specified *filename* in specified *folder* | Delete the entry for the specified filename from the directory for the specified folder; it may be wise to prohibit this command in the case that this is the only directory entry for the file on question. |

These commands can be implemented by the user typing an appropriate command on the keyboard, or by a program issuing the same command automatically. As an optional refinement, the operating system also provides a graphical user interface 72, that operates as follows. We imagine that the user creates a file, $f_1$, and associates it with a folder, $F_1$. It may be that the user wishes also to associate the file with additional folders. The user is free to drag the file to as many additional folders, G, H, ..., as he or she wishes. To enable this, some mechanism is required to enable the user to easily differentiate between:

- the requirement to move a file from one folder to another, with the association between the file and the first folder being broken;
- the requirement to move a file to a new folder such that the file remains associated with both folders.

An example of how this could be achieved would be for the user to hold down the left mouse button when wishing to replace the association with folder $F_1$ with an association with folder G, and to hold down the right mouse button when wishing to create a new association with G additional to the existing association with $F_1$. The former approach corresponds to current usage. The latter approach enables the multiple associations of one file with several folders.

A mechanism is also necessary to allow the user to delete an association, whether created manually or automatically (see below). This could be done by dragging the file more than a certain distance away from the folder. The user would need to be prevented from deleting an association when it is the only one relating to that particular file.

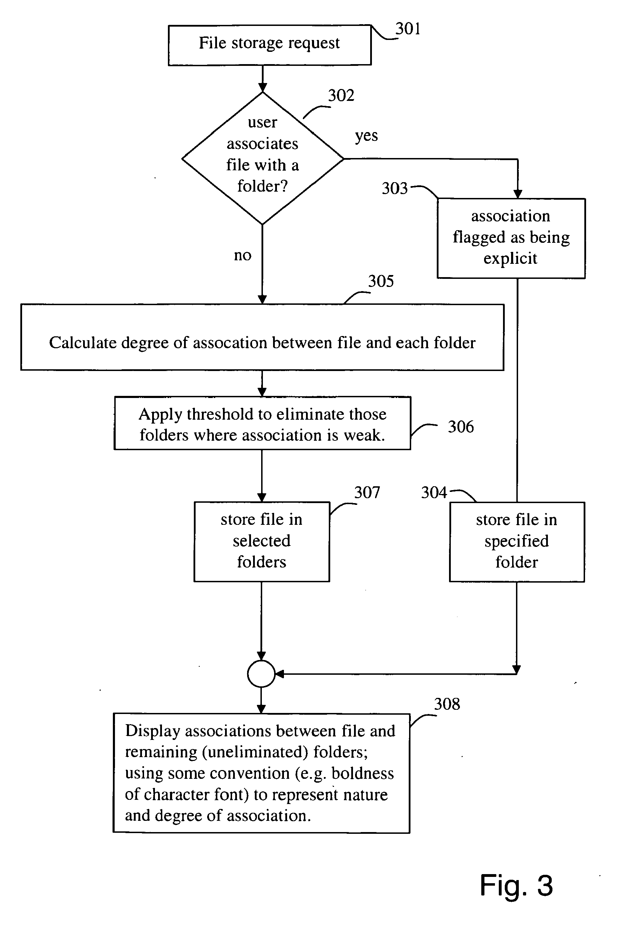

In general, however, users are likely only to associate a file with a very few folders, frequently only one. We now consider the situation where the user of the system (or a program) wishes to save a file but does not specify in which folder it is to be stored. The operating system includes an association section 73 which operates as shown in Figure 3. In addition to this explicit user-created association, the proposed system determines by using machine classification techniques applied to $f_1$ that its subject matter is also relevant to additional folders $F_2 ... F_n$. The machine classification algorithm will also generate, for each of these folders, a number (e.g. between 0 and 1) indicating the degree of association, $d_{12} ... d_{1n}$.

First (301), a file storage request is received. If (recognised at 302) the request stipulated a destination folder, then the association with the folder is flagged as explicit by setting an association value to maximum (=1) at Step 303, whereupon the file is (Step 304) stored in the manner indicated in Table I, with the addition however that the association value is stored in the association field of the directory entry that is created. If desired, the user could be permitted to specify the degree of association to be recorded in the association field.

If, on the other hand, no folder is specified, the next step (305) is to calculate the degree of association between the file and each folder in the system. There are a number of ways in which such a machine classification technique could be applied. For example, where other files are already associated with the folders $F_2 ... F_n$, then we can use the average similarity measure between the file $f_1$ and the other files in each of $F_2 ... F_n$ to calculate the degrees of association $d_{12} ... d_{1n}$.

In the case of text files we can use the cosine similarity measure between the file $f_1$ and other files.

The cosine similarity rule is well know *per se*. For more on the cosine similarity measure, see Harman, D., (1992) Ranking algorithms. In Frakes, W., and Baeza-Yates, R. (eds) Information Retrieval, Englewood Cliffs, , NJ: Prentice-Hall. Briefly, however, it operates as follows.

Imagine a set of documents. They will contain in all T different terms. The simplest interpretation of term would be a word (ignoring trivial words like 'a' etc).

We want a measure of the similarity between two documents, A and B. We imagine a vector space with T dimensions, where each document is represented by a vector. The value of coordinate i is the number of times which term i occurs in the document.

So, the similarity between documents A and B is the dot product of vectors representing A and B divided by the product of the magnitudes of the two vectors, that is to say:

$$\frac{\mathbf{A.B}}{|\mathbf{A}||\mathbf{B}|} .$$

By magnitude of a vector we mean the square root of the dot product of the vector with itself.

This is the basic approach. One can make this more sophisticated. For example, one can allow for the fact that some terms are more significant than others. If two documents share a term which no other document shares, that probably means they are more related than if they share a term which every document has.

Additionally, one can argue that this approach rests theoretically on all the dimensions of the vector being orthogonal. If the terms are not independent, then this will not be the case. So, if desired, one can introduce an extra sophistication (explained in chapter 10 of Gerard Salton's book 'Automatic Text Processing : The Transformation, Analysis and Retrieval of Information by Computer', published by Addison-Wesley.) to compensate for this, by calculating the dependence between terms (e.g. across the whole document base).

One option would be, for folder $F_j$, to determine the cosine similarity measure between the file $f_1$ and each of the files in folder $F_j$, and then take the average. To reduce computation, it would be preferable to maintain an up-to-date copy of the vector for each file. Another, faster option, would be instead to maintain an average vector for the files in the folder $F_j$; e.g. a vector each of whose terms represents the average frequency of occurrence of a respective word in all the files within the folder $F_j$ taken together. The measure of association between a new file and the folder $F_j$ is then the cosine similarity measure between the vector for the new file and the average vector. When the new file has been stored, it becomes part of the directory contents and thus the average vector is updated. In this process, one may, if desired, consider not only the files associated with the folder under consideration but files associated with sub-folders that are associated with the folder under consideration.

Reverting to Figure 3, once a degree of association has been calculated for each folder, those folders are selected whose degrees of association are above a predetermined threshold (Step306). Then (307) the file is stored in the selected folders; or, more precisely, it is stored once but recorded in the directory of each selected folder, as in the first row of Table II above.

The utility of the stored association field is that, either (as shown) following the saving of a file, or in response to a "display directory" command, a listing of the contents of a folder can be displayed, including the association value. In particular, the filenames could be displayed in descending (or ascending) order of association. Rather than a listing, in the sense of a linear display, other display formats might be used, e.g. a two-dimensional structure.

In Figure 3 it is assumed that, where the user has specified a destination folder, (a) no additional folder(s) are required and (b) the degree of association is maximum (or specified by the user). In a variant, the degree of association could be calculated as described above. In another variant, the association calculation could be used to identify additional folders as well as the one(s) specified in the file storage request, in which case the exit from Step 303 would lead to Step 305.

Files associated explicitly by the user with a folder could be explicitly identified, e.g. by a font characteristic or by the shading or colour of an icon. In this way, it would be possible to distinguish files explicitly associated with a folder from those calculated to have a very close association (e.g. unity or very close to unity).

When the user inspects folder $F_1$, he will see file $f_1$, e.g. displayed as a filename or icon with filename as in current systems. As discussed, some method will be used to indicate that the association between file $f_1$ and folder $F_1$ is deliberately created by the user. When the user inspects one of the folders $F_2 ... F_n$ he will see the file displayed, but with an indication (e.g. using lighter shading) of the degree of association.

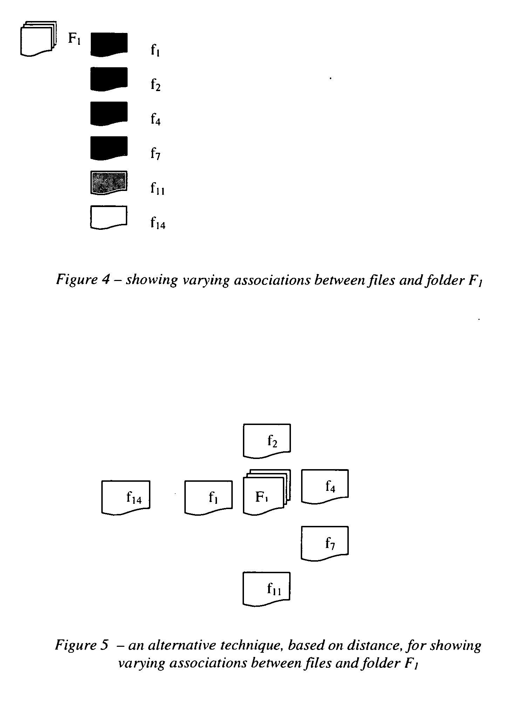

As an illustration, Figure 4 displays folder $F_1$, showing the explicit association with file $f_1$ by use of a file icon in dark black. Two other files have been explicitly associated with $F_1$: $f_2$ and $f_4$. Hence these files also have icons in dark black. Three other files, $f_7$, $f_{11}$, $f_{14}$, have been associated with $F_1$ by machine classification, with decreasing degree of association illustrated by the degree of shading; i.e. the degree of association of $f_7$ is greater than that of $f_{11}$, which in turn is greater than that of $f_{14}$.

A user might wish to create an explicit but reduced (e.g. 0.5) association between a file and folder. One mechanism for doing this would be by displaying as lines the associations between files and folders, and mouse-clicking on such a line to view and edit the degree of association.

An extension to this is to indicate the degree of association between the files and the folder by the distance on the screen as shown in Figure 5. The degree of association between each of the files $f_2$, $f_4$, $f_7$, $f_{11}$, $f_{14}$, and the folder $F_1$ is as in Figure 4.

Alternatively, other techniques, such as the hyperbolic display described in "A focus + context technique based on hyperbolic geometry for visualising large hierarchies", Lamping, J., Rao, R., Pirolli, P., Conference proceedings on human factors in computing systems, Denver, CO, May 1995, pp. 401-408, could be used to view all the files and represent the degree of association between files. Folders could be represented as folder icons distributed amongst the files icons according to the degree of association between files and folders.

Alternatively, any number of alternative techniques could be combined. For example, in Figure 5, shading of the file icons could be used additionally to represent the degree of association between each of the files and the folder $F_1$.

The foregoing assumes (through the reference to the cosine similarity measure to calculate similarity between text files) that the files are textual, or at least that the processing is carried out on the textual part of multimedia files. The idea could be extended to any class of multimedia files by replacing the use of the cosine similarity measure with an appropriate measure of similarity between non-text files.

Other approaches to the assessment of similarity between a file to be saved and files already stored can also be used, instead or in combination. For example, association values may be weighted to give preference to folders that have recently been accessed by the user.

As a further extension, a folder could be defined by a query, as proposed for 'search folders' in the Microsoft Vista operating system. As a result, all documents found by a search on this query would be placed in the folder. Moreover, the query could be activated whenever a new document is added to the system, thus enabling the folder to grow continuously. This invention additionally proposes that the relevance of the document to the folder (as determined by the search algorithm) would determine the degree of association between the document and the folder, and that this degree of association could be displayed graphically as discussed in preceding sections and subsections. The query might be a conventional text query, or a semantic query .

Another extension would be to use machine learning to learn, from a defined folder, an appropriate query and thereafter grow the folder. This could be done either by using conventional information retrieval techniques to determine keywords representative of the files in the folder, and thus appropriate to use to define the query. Alternatively, semantic techniques, e.g. drawn from ontology based information extraction , could be used to establish the core concepts and instances found in the files in the folder, and then these concepts and instances could be used to define a semantic query.

The approach of 'search folders' could also be extended to multimedia files, e.g. by using a multimedia search based on the textual specification of concepts sought (e.g. 'horizon', 'large circle', 'tune in a minor key') or by the use of representative files (e.g. containing a picture of a horizon, or a large circle, or a tune with some similarities to the one sought).

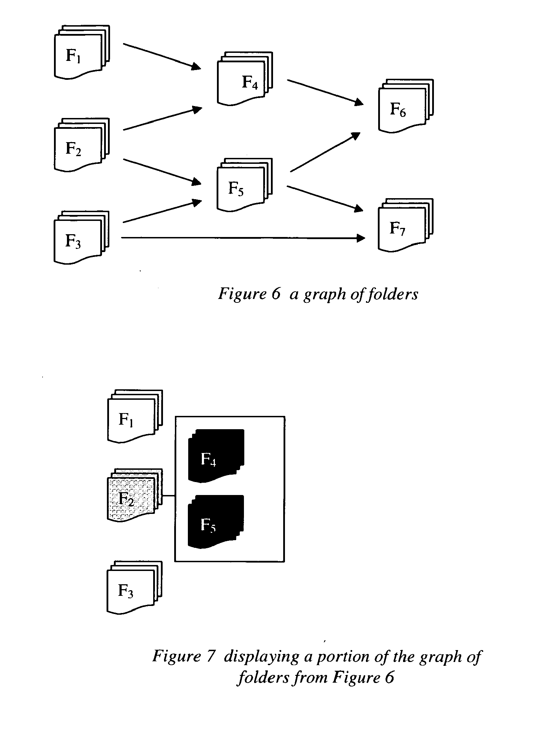

All the discussion so far has been concerned with the association of files with folders, including the possibility of multiply associating one file with several folders. The principle can also be extended to the association between folders. Current file storage systems, e.g. as incorporated in the Windows operating system, permit a folder to be a sub-folder of one other folder. Hence, in current systems, a hierarchical folder structure is established, in which a folder may have many sub-folders but only one parent folder. Permitting a folder to be a 'sub-folder' of (i.e. associated with) several parent folders creates a graph structure, as illustrated in Figure 6. The direction of the arrows points from parent to sub-folder, e.g. the figure implies that $F_4$ embodies a sub-concept of that embodied by $F_1$. The figure is purely illustrative but does show the richness of possible relationships.

There are various possible ways in which such a graph might be displayed to the user. One such way is shown in Figure 7. The same folders are displayed as in Figure 6. It is assumed that $F_1$, $F_2$, $F_3$ are at the top level, i.e. direct sub-folders of the folder which contains everything. Mousing over $F_2$ (indicated by this icon being displayed, e.g. in colour or hatched) displays $F_4$ and $F_5$. $F_4$ would also be displayed by mousing over $F_1$; $F_5$ would be displayed by mousing over $F_3$. Subsequent mousing over of $F_4$ as shown in Figure 7 would also display $F_6$; whilst mousing over $F_5$ would display $F_6$ and $F_7$. Mousing over a folder would also display the files directly within the folder.

It is proposed that the user be free to create sub-folders with multiple parents in an analogous way to which files are established with multiple folders, e.g. by left clicking on the mouse to move a folder from one parent to another, and right-clicking to establish a new parent relationship and leave a previous relationship intact.

The association between folder and sub-folder may be made explicitly by the user. The same machine classification techniques discussed above to associate files with folders could be used to associate folders with other folders. Again, the strength of association could be represented on the scale 0 to 1. The association would be calculated as some function (e.g. average) of the pairwise association between the files in the two folders or, computationally more simply, as a function of representations of the average of the files in each of the two folders. Thus, in the case of the cosine similarity measure, where each file is represented by a vector, an average vector could be computed for each folder and the association calculated between these two average vectors; rather than calculating the association between the vector representation of each file in one folder and the vector representation of each file in the other folder.. The direction of the association would be such that the more specific folder be a sub-folder of the more general. This could be based on the number of files in each folder, taking account of the number of files in sub-folders. Alternatively, machine learning techniques could be used to estimate the semantic width of each folder, e.g. the maximum distance between concepts in the folder using a measure of semantic similarity.

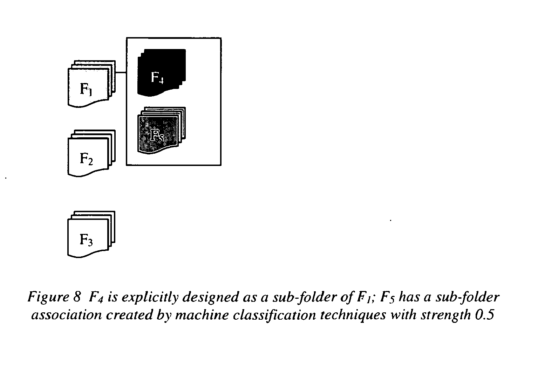

As an example, in Figure 6, $F_4$ has been explicitly designated to be a sub-folder of $F_1$, whereas this is not the case for $F_5$. It might be the case that machine-learning techniques indicate that $F_5$ has a sub-concept relationship to $F_1$,

e.g. with strength 0.5. Mousing over $F_1$ will display both $F_4$ and $F_5$, with some visual indication (in this case degree of shading) to illustrate that one association is explicitly created and the other is machine-learned. Figure 8 illustrates this.

It will be observed that the automatic creation of associations between folders is not possible upon initial creation of an empty folder. In this case, one may proceed by, as files are added to the folder (either directly or via sub-folders), updating a measure of degree of association between the folder and each of a plurality of other folders in the structure. The measures would then be stored, and evaluated to select one or more folders whose measures exceed a threshold, the new folder becoming associated with the superordinate folder or folders for which the association with the new folder exceeds the threshold, so that the folder can be accessed via the superordinate folder(s) and/or appears in any display of the contents of that superordinate folder (perhaps with a display of the measure also). To facilitate updating it maybe preferable to store all the measures, not only those in respect of the selected folders.

In this process, one may, if desired, consider not only the files associated with the folder under consideration but files associated with sub-folders that are associated with the folder under consideration; the same applies to the superordinate folders. When considering files in a sub-folder (of the folder under consideration or of the superordinate folders) one might wish to take into account the degree of association, so that a file in a weakly associated folder might have less weight than a file in a strongly associated folder.

It could be useful for the system to check, when associations between folders are created either manually or automatically, to avoid cycles in the graph (which imply the merging of intermediate folders). When such cycles are detected as being on the point of being created, the user could be asked what strategy he wished to take to avoid creating a cycle, e.g. not creating the association or merging folders etc.

In another extension to the invention, all or some of the folders might not be pre-created and named. Instead, a machine (unsupervised) learning algorithm could be used to cluster the files into a number of folders. The name used for each folder could be chosen automatically, to represent the characteristics of the files in the associated cluster, e.g. by using a term or terms with highest weight in the average of the representations of files in the folder, with the capability for the user to overwrite this name.

The description so far has been in the context of files in a file storage system. It can also be applied to any other form of information object, e.g. emails being stored in personal folders. Indeed, the approach can be extended so that the machine learning and machine classification algorithms apply concurrently to files and emails, creating a common classification system for both. The automated machine approach could also be extended to creating and using bookmarks in a browser. Specifically, in addition to, or instead of, the user bookmarking a page, the system could create the appropriate bookmarks. Indeed, a user interface could be created on these principles giving a common view (i.e. the same folder system) across all information objects of interest to the user (e.g. files, emails, web pages) whether stored on his or her own computer or elsewhere, such as an intranet or the World Wide Web. Folders, whether created explicitly by the user or by machine techniques would be available for any class of information object. The user could be provided with the capability to categorise by file type (as in current systems) or to filter out those file types in which he or she is not currently interested.

As a corollary to this, when an email is copied from the Inbox to a personal folder, any attachments (e.g. a Word document) could be made available explicitly within that folder, without the requirement to open the email. The link with the email. could still be retained, so that attachments could still be opened from the email if desired.

As mentioned above, in the process of computing measures of degrees of association between a file or folder and a folder under consideration, one may, if desired, consider not only the files associated with the folder under consideration but files associated with sub-folders that are associated with the folder under consideration. The following discussion outlines a number of options for implementing this.

In the case where we wish to compute the association between a file F and a folder which itself contains sub-folders then we may

- Purely take account of those files directly in the folder and compute the average association between F and the files directly in the folder. Here we may wish to take into consideration only those files explicitly associated with the folder by the user or we may wish to take into account those files with an automatically computed, and hence potentially weaker, association with the folder. Furthermore, calculating the average association between F and files in the folder we may wish to weight each file according to its association with the folder.
- Compute the average association between F and the files directly in the folder and in its sub-folders and its sub-sub-folders and so on.
- In respect of the previous point, we may take account of the degree of association between sub-folders and the superordinate folder. When calculating the average association between F and the files in the folder, then where a file is in a sub-folder of that folder, we may calculate a weighted average with the weight of the particular file determined by the association of its folder with the superordinate folder. As an example where, e.g. using the cosine similarity rule, each file is represented by a vector, then when calculating the average association between F and the folder we may weight the vector associated with a file in a sub-folder with a factor equal to the association between that sub-folder and its superordinate folder. Where a file is in a sub-sub-folder, for example, we may use as weight some function (e.g. the product) of the association of the sub-sub-folder with the sub-folder and the sub-folder with the superordinate folder.

- When calculating an association between F and a file we may additionally weight the file to take account both of its association with its immediate folder and this folder's association with its superordinate folder and so on through a chain of superordinate folders to F.

In the case where we wish to compute the association between a folder G and a folder H, both of which contain sub-folders, and potentially sub-sub-folders and so on, then in calculating the association between G and H, based on the average association between files in G and H we may

- Purely take into account those files directly in G and H. Here we may wish to take into consideration only those files explicitly associated with the folder by the user or we may wish to take into account those files with an automatically computed, and hence potentially weaker, association with the folder. Further calculating the association between G and H we may wish to weight each file in G and H according to its association with G and H respectively.
- Take into account those files in sub-folders, sub-sub-folders and so on, of G and H.
- In respect of the previous point, we may take account of the degree of association between sub-folders and the superordinate folder. When calculating the association between G and H, we may calculate a weighted average of the association between files in G and its sub-folder and files in H and its sub-folder, taking into account the association of the respective sub-folders with G and H respectively. Where a file is in a sub-sub-folder, for example, we may use as weight some function (e.g. the product) of the association of the sub-sub-folder with the sub-folder and the sub-folder with the superordinate folder.
- When calculating an association between G and H we may additionally weight the files in G and H, and their sub-folders, to take account both of their association with their immediate folder and the folders association with their superordinate folder and so on through a chain of superordinate folders to G and H as appropriate.

## Claims

1. A method of operating a computer system having storage for data files and operable for storage and retrieval of files in accordance with a folder structure, the system being able to associate a file with more than one folder comprising

   receiving a request to store a file;
   determining a measure of degree of association between the file and each of a plurality of folders of the structure;
   selecting folders on the basis of the measures; and
   storing the measure in respect of each of the selected folders.

2. A method of operating a computer system having storage for data files and operable for storage and retrieval of files in accordance with a folder structure, comprising receiving a request to store a file in a specified folder ;

   determining a measure of degree of association between the file and the specified folder; and
   storing the measure in respect of the selected folders.

3. A method according to claim 1 or 2 in which the step of determining a measure of degree of association is obtained by comparing the file under consideration with other files already associated with that folder.

4. A method according to claim 3 in which the step of determining a measure of degree of association is obtained by computing a measure of similarity between the file under consideration and each other file already associated with that folder, and generating from them a combined measure.

5. A method according to claim 3 in which the step of determining a measure of degree of association is obtained by computing a measure of similarity between the file under consideration and a combined characteristic of the other files already associated with that folder.

6. A method according to claim 4 or 5 in which the file is a text file or file containing text and the measure of similarity is obtained by comparing the frequency of incidence of words in the text.

7. A method according to claim 6 in which the measure of similarity is the cosine similarity measure.

8. A method according to any one of claims 1 to 7 including displaying the names of files stored in a particular folder, the display including the measure of association.

9. A method according to any one of claims 1 to 8 including displaying the names of files stored in a particular folder, the arrangement of display of the names being a function of the respective measures of association.

10. A method according to any one of the preceding claims in which the system is able to associate a folder with more than one superordinate folder comprising

receiving a request to create a folder;
as files are added to the folder, updating a measure of degree of association between the folder and each of a plurality of other folders of the structure;
storing the measures; and
selecting one or more folders on the basis of the measures.

11. A computer system having storage for data files and control means operable for storage and retrieval of files in accordance with a folder structure, wherein the control means is able to associate a file with more than one folder, and including means operable in response to a request to store a file to determine a measure of degree of association between the file and each of a plurality of folders of the structure, to select folders on the basis of the measures and to store the measure in respect of each of the selected folders.

12. A computer system having storage for data files and control means operable for storage and retrieval of files in accordance with a folder structure, wherein the control means is able to associate a file with more than one folder, and including means operable in response to a request to store a file in a specified folder to determine a measure of degree of association between the file and the specified folder and to store the measure in respect of each of the selected folders.

13. A computer system according to claim 11 or 12 in which the means for determining a measure of degree of association is operable to compare the file under consideration with other files already associated with that folder.

14. A computer system according to claim 13 in which the means for determining a measure of degree of association is operable to compute a measure of similarity between the file under consideration and each other file already associated with that folder, and generate from them a combined measure.

15. A computer system according to claim 13 in which the means for determining a measure of degree of association is operable to compute a measure of similarity between the file under consideration and a combined characteristic of the other files already associated with that folder.

16. A computer system according to claim 14 or 15 in which the file is a text file or file containing text and the measure of similarity is obtained by comparing the frequency of incidence of words in the text.

17. A computer system according to claim 16 in which the measure of similarity is the cosine similarity measure.

18. A computer system according to any one of claims 11 to 17 in which the control means is operable to display the names of files stored in a particular folder, the display including the measure of association.

19. A computer system according to any one of claims 11 to 18 in which the control means is operable to display the names of files stored in a particular folder, the arrangement of display of the names being a function of the respective measures of association.

20. A computer system according to any one of claims 11 to 19 in which the system is able to associate a folder with more than one superordinate folder, and comprising means operable to

receive a request to create a folder;
as files are added to the folder, update a measure of degree of association between the folder and each of a plurality of other folders of the structure;

store the measures; and
select one or more folders on the basis of the measures.

21. A method of operating a computer system having storage for data files and operable for storage and retrieval of files in accordance with a hierarchical folder structure, the system being able to associate a folder with more than one superordinate folder comprising

receiving a request to create a folder;
as files are added to the folder, update a measure of degree of association between the folder and each of a plurality of other folders of the structure;
store the measures; and
select folders on the basis of the measures.

22. A method according to claim 10 or 21 in which the measure of degree of association between a folder and a superordinate folder is a function of the degree of association between files associated with the folder under consideration and files associated with that superordinate folder.

23. A method according to claim 10 or 21 in which the files considered in respect of the folder under consideration and/or in respect of the superordinate folder include files associated with subordinated folders associated directly or indirectly with the respective folder.

Fig. 1

Fig. 2

File storage request ⟍301

302

user
associates
file with a
folder?

yes

no

303 ⟋
association
flagged as being
explicit

305 ⟋
Calculate degree of assocation between file and each folder

Apply threshold to eliminate those
folders where association is weak.  ⟋ 306

307 ⟋
store file in
selected
folders

304 ⟋
store file in
specified
folder

308 ⟋
Display associations between file and
remaining (uneliminated) folders;
using some convention (e.g. boldness
of character font) to represent nature
and degree of association.

Fig. 3

$F_1$

$f_1$

$f_2$

$f_4$

$f_7$

$f_{11}$

$f_{14}$

*Figure 4 – showing varying associations between files and folder $F_1$*

$f_2$

$f_{14}$ $f_1$ $F_1$ $f_4$

$f_7$

$f_{11}$

*Figure 5 – an alternative technique, based on distance, for showing varying associations between files and folder $F_1$*

*Figure 6 a graph of folders*

*Figure 7 displaying a portion of the graph of folders from Figure 6*

*Figure 8  $F_4$ is explicitly designed as a sub-folder of $F_1$; $F_5$ has a sub-folder association created by machine classification techniques with strength 0.5*

**European Patent Office**

# EUROPEAN SEARCH REPORT

Application Number

EP 07 25 4602

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | MATT NEUBURG: "DEVONthink Thinks, So You Don't Have To" INTERNET ARTICLE, [Online] 8 March 2004 (2004-03-08), pages 1-3, XP002477918 Retrieved from the Internet: URL:http://db.tidbits.com/article/7575?print_version=1> [retrieved on 2008-04-22] * page 1, line 36 - page 2, line 22 * ----- | 1-23 | INV. G06F17/30 |
| X | TAKESHI NISHIDA ET AL: "Drag-and-Guess: Drag-and-Drop with Prediction" HUMAN-COMPUTER INTERACTION - INTERACT 2007 LECTURE NOTES IN COMPUTER SCIENCE;, SPRINGER BERLIN HEIDELBERG, BE, vol. 4662, 1900, pages 461-474, XP019070117 ISBN: 978-3-540-74794-9 * page 463, line 20 - page 464, line 8 * * page 466, lines 5-35 * ----- | 1,3,11, 13 | |
| A | ARAVIND VENKATACHALAM: MASTER'S THESIS, UNIVERSITY OF TEXAS AT ARLINGTON, [Online] 17 September 2007 (2007-09-17), pages 1-99, XP002477919 USA Retrieved from the Internet: URL:http://dspace.uta.edu/bitstream/10106/612/1/umi-uta-1820.pdf> [retrieved on 2008-04-22] * page 4, lines 1-8 * * page 10, line 10 - page 12, line 8 * * page 92, lines 6-9 * ----- | 1-21 | TECHNICAL FIELDS SEARCHED (IPC)<br><br>G06F |

The present search report has been drawn up for all claims

| Place of search | Date of completion of the search | Examiner |
|---|---|---|
| The Hague | 23 April 2008 | Bykowski, Artur |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20050256842 A
- US 20050010593 A

**Non-patent literature cited in the description**

- Ranking algorithms. **HARMAN, D.** Information Retrieval. Prentice-Hall, 1992
- **LAMPING, J. ; RAO, R. ; PIROLLI, P.** A focus + context technique based on hyperbolic geometry for visualising large hierarchies. *Conference proceedings on human factors in computing systems,* May 1995, 401-408